# EUROPEAN PATENT APPLICATION

(11) **EP 4 325 650 A1**
(43) Date of publication of application: **21.02.2024**
(21) Application number: 22822254.3
(22) Date of filing: 14.10.2022
(51) Int. Cl.: H01M 50/531, H01M 50/30, H01M 50/543

(54) **CURRENT COLLECTOR DISC AND BATTERY**

(30) Priority: 04.07.2022 CN 202221708148 U
(71) Applicant: Eve Power Co., Ltd., Jingmen, Hubei 448000 (CN)
(72) Inventor: CHEN, Wen, Jingmen, Hubei 448000 (CN)
(74) Representative: Lermer, Christoph
(86) International application number: PCT/CN2022/125246
(87) International publication number: WO 2024/007475

(57) **Abstract**

The present application provides a current collector plate and a battery. The current collector plate has a jellyroll connection portion and a pole connection portion, wherein the jellyroll connection portion is provided to be connected to the jellyroll of the battery; the pole connection portion is provided to be connected to a pole of the battery; the current collector plate is provided with a dividing groove and at least one connecting bridge provided in the dividing groove; the connecting bridge connects the jellyroll connection portion and the pole connection portion, wherein the connecting bridge is provided to be fused to disconnect the jellyroll connection portion and the pole connection portion when a thermal runaway of the battery occurs. When the thermal runaway occurs in the battery, the collector plate can not only timely cut off the connection between the pole post and the roll core, but also facilitate the exhaust of the gas generated by the thermal runaway, so as to better reduce the probability of fire or explosion of the battery.

## Description

This application claims priority to Chinese Patent Application No. 202221708148.7 filed on July 4, 2022 to the China Patent Office, the entire contents of which are incorporated herein by reference.

### Technical Field

The present application relates to the technical field of batteries, for example, to a current collector plate and a battery.

### Background Art

The anode current collector plate of the lithium ion battery has the function of collecting the current of the jellyroll tab and conducting the internal current to the pole to form the external current. In the actual cell safety test process, due to the structural characteristics of the anode current collector plate, the high-pressure gas inside the cell cannot be discharged in time when a thermal runaway occurs, increasing the risk of cell shell cracking and anode pole flying out.

### Summary of the Invention

The present application provides a current collector plate, which can not only timely cut off the connection between the pole and the jellyroll, but also facilitate the exhaust of the gas generated by the thermal runaway when a thermal runaway occurs in the battery, so as to better reduce the probability of fire or explosion of the battery.

The present application provides a battery with a low probability of fire or explosion when a thermal runaway occurs, improving the safety of the battery in use.

In a first aspect, the embodiments of the present application provide a current collector plate. The current collector plate has a jellyroll connection portion and a pole connection portion; the jellyroll connection portion is provided to be connected to a jellyroll of a battery; the pole connection portion is provided to be connected to a pole of the battery; the current collector plate is provided with a dividing groove and at least one connecting bridge provided in the dividing groove; and the connecting bridge connects the jellyroll connection portion and the pole connection portion, wherein the connecting bridge is provided to be fused to disconnect the jellyroll connection portion and the pole connection portion when the thermal runaway of the battery occurs.

In an embodiment, the pole connection portion is provided in a central region of the current collector plate; the dividing groove comprises a first groove portion provided around the pole connection portion and a plurality of second groove portions provided at intervals around the first groove portion, the plurality of second groove portions respectively communicating with the first groove portion; and one of the connecting bridges is provided in the first groove portion.

In an embodiment, the current collector plate is circular, the core connection portion is circular; the second groove portion includes a radial groove extending in a radial direction of the current collector plate and a circumferential groove extending in a circumferential direction of the current collector plate.

In an embodiment, the pole connection portion comprises a central portion and a plurality of radiation portions; the central portion is located in a central region of the current collector plate; the plurality of radiation portions are provided around the central portion; and the connecting bridge is provided at a position between two adjacent radiation portions.

In an embodiment, the connecting bridges are provided in pairs, and the connecting bridges provided in pairs are arranged symmetrically with respect to the central portion.

In an embodiment, the pole connection portion further comprises an outer peripheral portion spaced apart from the central portion; and both ends of at least one radiation portion are connected to the central portion and the outer peripheral portion, respectively.

In an embodiment, the thickness of the connecting bridge is less than the thickness of the jellyroll connection portion and the pole connection portion.

In an embodiment, the edge of the current collector plate is provided with positioning grooves.

In an embodiment, the positioning grooves are plural; and the plurality of positioning grooves are provided at intervals along a profile direction of the current collector plate.

In a second aspect, the embodiments of the present application also provide a battery comprising a case, a jellyroll and the current collector plate as described above, wherein the jellyroll is provided in the case, the case being provided with a pole; the jellyroll is connected to the jellyroll connection portion; and the pole is connected to the pole connection portion.

Advantageous Effects of the Present Application. The connecting bridge is fused to disconnect the jellyroll connection portion and the pole connection portion when the battery has a thermal runaway, so as to avoid the aggravation of thermal runaway. The dividing groove can provide a gas discharge channel, facilitating the exhaust of the gas generated by the thermal runaway, so as to better reduce the probability of fire or explosion of the battery.

Advantageous Effects of the Present Application. With the current collector plate as described above, the connecting bridge is fused to disconnect the jellyroll connection portion and the pole connection portion when the battery has a thermal runaway, so that the pole and the jellyroll are disconnected, so as to avoid the aggravation of thermal runaway. The dividing groove can provide a gas discharge channel, releasing the internal pressure of the battery, reducing the risk of the case breaking of the battery and the anode pole flying out.

### Brief Description of the Drawings

Fig. 1 is a schematic view showing the structure of a current collector plate according to a first embodiment of the present application;
Fig. 2 is a schematic view showing the structure of another current collector plate according to the first embodiment of the present application;
Fig. 3 is a schematic view showing the structure of a current collector plate according to a second embodiment of the present application;
Fig. 4 is a schematic view showing the structure of another current collector plate according to the second embodiment of the present application;
Fig. 5 is a schematic view showing the structure of a battery according to an embodiment of the present application.

### Reference numerals:

1, jellyroll connection portion;
2, pole connection portion; 21, central portion; 22, radiation portion; 23, outer peripheral portion;
3, dividing groove; 31, first groove portion; 32, second groove portion; 321, radial groove; 322, circumferential groove;
4, connecting bridge; 5, positioning groove;
100, case; 200, pole; 300, jellyroll.

### Detailed Description of the Invention

In the description of the present application, it should be understood that the directional or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the directional or positional relationships shown in the drawings. It is merely for the purpose of describing the present application and simplifying the description, and is not intended to indicate or imply that a particular orientation, configuration and operation of the referenced device or element is required and should not be construed as limiting the scope of the present application.

Furthermore, the features defined as "first" and "second" may explicitly or implicitly comprise one or more of the features, for distinguishing descriptive features, but not for defining sequences or importance. In the description of the present application, unless otherwise indicated, the meaning of "plurality" is two or more.

In the description of the present application, unless otherwise specified and limited, the terms "mounted", "connected with", and "connecting" should be interpreted broadly, e.g. either fixedly or detachably or integrally. It may be a mechanical connection or an electrical connection; it can be directly connected or indirectly connected by an intermediate medium, and can be the communication between two elements. The meaning of the above terms in this application will be understood in specific circumstances by those of ordinary skill in the art.

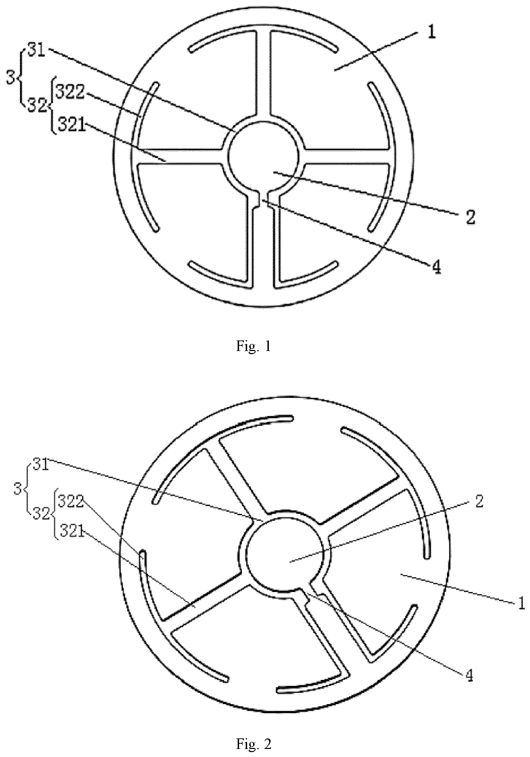

The structure of the current collector plate of an embodiment of the present application is described below with reference to Figs. 1-4.

The present application provides a current collector plate, as shown in Figs. 1-4. The current collector plate includes a jellyroll connection portion 1 and a pole connection portion 2. The jellyroll connection portion 1 is provided to be connected to a jellyroll 300 of a battery. The pole connection portion 2 is provided to be connected to a pole 200 of the battery. The current collector plate is provided with a dividing groove 3 and at least one connecting bridge 4 provided in the dividing groove 3. The connecting bridge 4 connects the jellyroll connection portion 1 and the pole connection portion 2. The connecting bridge 4 is provided to be fused to disconnect the jellyroll connection portion 1 and the pole connection portion 2 when a thermal runaway of the battery occurs. In the present embodiment, since the jellyroll connection portion 1 and the pole connection portion 2 are only conducted by the connecting bridge 4, the connecting bridge 4 is very easy to be fused when the thermal runaway of the battery occurs, ensuring that the pole 200 and the jellyroll 300 can be disconnected when the thermal runaway of the battery occurs, thereby preventing the thermal runaway from being aggravated. On the other hand, the dividing groove 3 separates the jellyroll connection portion 1 and the pole connection portion 2. The dividing groove 3 provides a gas discharge passage when a large amount of high-pressure gas is generated in the event of thermal runaway of the battery, so as to release the internal pressure of the battery and reduce the risk of the case 100 of the battery breaking and the anode pole flying out.

In some embodiments, as shown in Figs. 1 and 2, the pole connection portion 2 is provided in the central region of the current collector plate. The dividing groove 3 includes a first groove portion 31 provided around the pole connection portion 2 and a plurality of second groove portions 32 provided at intervals around the first groove portion 31. The plurality of second groove portions 32 respectively communicate with the first groove portion 31. One of the connecting bridges 4 is provided in the first groove portion 31. In general, the pole 200 is located at the central region of the case 100. The pole connection portion 2 is provided in the central region of the current collector plate to facilitate the welding of the pole 200 to the pole pole connection portion 2, thereby improving the battery assembly efficiency. The dividing grooves 3 are radial groove bodies. The high-pressure gas generated in the event of thermal runaway of the battery can rapidly pass through the current collector plate through the first groove portion 31 and the second groove portion 32, thereby achieving the purpose of rapidly releasing the internal pressure of the battery.

In some embodiments, as shown in Figs. 1-2, the current collector plate is circular. The jellyroll connection portion 1 is circular. The second groove portion 32 includes a radial groove 321 extending in a radial direction of the current collector plate and a circumferential groove 322 extending in a circumferential direction of the current collector plate. The second groove portion 32 has radial grooves 321 extending in the radial direction of the current plate and circumferential grooves 322 extending in the axial direction of the current collector plate, and can increase the speed of the high-pressure gas generated when the thermal runaway of the battery occurs through the current collector plate, thereby increasing the purpose of releasing the internal pressure of the battery.

In other embodiments of the present application, the shape of the dividing grooves 3 may be selected according to actual needs and is not limited to the above description.

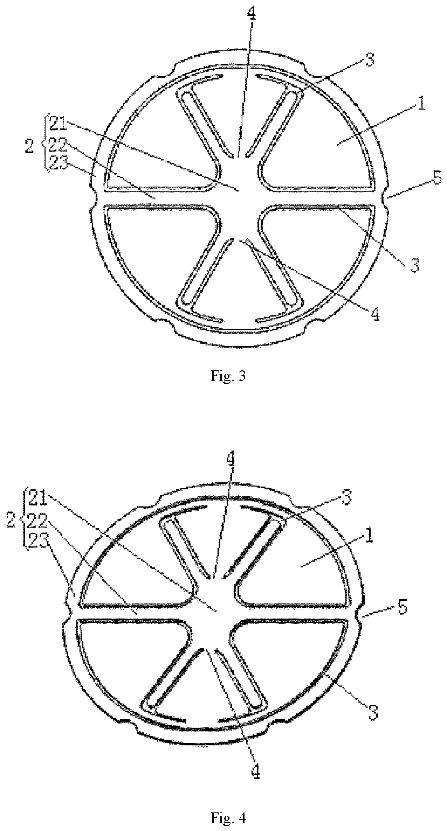

In some embodiments, as shown in Figs. 3-4, the pole connection portion 2 includes a central portion 21 located in a central region of the current collector plate and a plurality of radiation portions 22 provided around the central portion 21, with the connecting bridge 4 provided at a position between two adjacent radiation portions 22. The pole connection portion 2 includes a plurality of radiation portions 22, so that the dividing grooves 3 provided to separate the pole connection portion 2 and the jellyroll connection portion 1 are also formed in a radial structure. The high-pressure gas generated when thermal runaway of the battery core occurs can rapidly pass through the current collector plate from the partition grooves 3, thereby achieving the purpose of rapidly releasing the internal pressure of the battery.

In some embodiments, as shown in Figs. 3-4, the connecting bridges 4 are provided in pairs, and the connecting bridges 4 provided in pairs are arranged symmetrically with respect to the central portion 21. The pair arrangement of the connecting bridges 4 ensures stable connectivity of the pole connection portion 2 and the jellyroll connection portion 1, thereby ensuring the stable conduction of the jellyroll 300 and the pole 200 of the battery during normal operation of the battery.

In some embodiments, as shown in Figs. 3-4, the pole connection portion 2 further includes an outer peripheral portion 23 that is spaced apart from the central portion 21. Both ends of at least one radiation portion 22 are connected to the central portion 21 and the outer peripheral portion 23, respectively. The outer peripheral portion 23 can be easily welded to a certain extent, so that it is convenient for the user to assemble the battery.

In other embodiments of the present application, the shape of the pole connection portion 2 may be selected according to actual needs, and is not limited to the above description.

The number of the connecting bridges 4 can be selected according to practical needs. In the present application, as shown in Figs. 1 and 2, only one connecting bridge 4 is provided, so that the jellyroll 300 and the pole column 200 can be disconnected after the connecting bridge 4 is fused. The structure in which only one connecting bridge 4 is provided is suitable for a battery which requires a faster fusing speed and has a relatively poor explosion-proof effect of the explosion-proof structure itself. As shown in Figs. 3 and 4, the connecting bridge 4 is provided with two connecting bridges 4, so that the jellyroll 300 and the pole 200 can be disconnected only after the two connecting bridges 4 are completely fused. The structure of the plurality of connecting bridges 4 is suitable for a battery having a low requirement for the fusing speed and a reliable explosion-proof structure, allowing the battery to operate for a period of time after the thermal runaway occurs.

In some embodiments, the thickness of the connecting bridge 4 is less than the thickness of the core connection 1 and the post connection 2. In this way, on the premise of ensuring the stable conduction of the jellyroll 300 and the pole 200 during the operation of the battery, it can ensure that the connecting bridge 4 can be quickly fused and disconnect the jellyroll 300 and the pole 200 when the thermal runaway of the battery occurs, so as to avoid the phenomenon that the degree of thermal runaway is increased.

In some embodiments, the edge of the current collector plate is provided with positioning grooves 5 as shown in Figs. 3 and 4. The positioning groove 5 serves to position the current collector plate when welding the current collector plate, thereby facilitating the welding of the current collector plate with the pole 200 or the jellyroll 300.

In some embodiments, as shown in Figs. 3-4, the positioning grooves are plural. The plurality of positioning grooves are provided at intervals along a profile direction of the current collector plate. Thereby, the positioning accuracy of the current collector plate can be improved and the welding quality can be ensured.

Two embodiments of the current collector plate of the present application are described below with reference to Figs. 1-4.

### Embodiment 1

As shown in Figs. 1 and 2, the current collector plate has a jellyroll connection portion 1 and a pole connection portion 2. The jellyroll connection portion 1 is provided to be connected to a jellyroll 300 of the battery. The pole connection portion 2 is provided to be connected to a pole 200 of the battery. The current collector plate is circular. The pole connection portion 2 is provided in the central region of the current collector plate. The current collector plate is provided with dividing grooves 3. The dividing groove 3 includes a first groove portion 31 provided around the pole connection portion 2 and five second groove portions 32 provided at intervals around the first groove portion 31. The five second groove portions 32 respectively communicate with the first groove portion 31. Three of the second groove portions 32 are of the same shape, and the other two second groove portions 32 are of the same shape. The connecting bridge 4 is arranged between the two second groove portions 32. Each second groove portion 32 includes a radial groove 321 extending in a radial direction of the current collector plate and a circumferential groove 322 extending in a circumferential direction of the current collector plate.

### Embodiment 2

As shown in Figs. 3-4, the current collector plate of the present embodiment has a jellyroll connection portion 1 provided to be connected to a jellyroll 300 of a battery and a pole connection portion 2 provided to be connected to a pole 200 of the battery. The pole connection portion 2 includes a central portion 21, six radiation portions 22 and an outer peripheral portion 23. Both ends of the two radiation portions 22 are connected to the central portion 21 and the outer peripheral portion 23. One end of the radiation portion 22 is connected to the central portion 21 and the other end is spaced apart from the outer peripheral portion 23 by the dividing groove 3. The two connecting bridges 4 separate the dividing groove 3 into four parts communicating with each other, and the four parts are evenly spaced along the circumferential direction of the central portion 21. The outer edge of the outer peripheral portion 23 is provided with six positioning grooves 5 which are uniformly spaced.

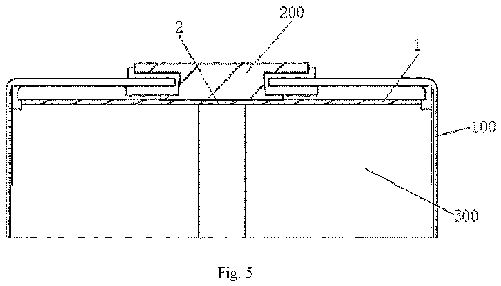

The present application also provides a battery, as shown in Fig. 5, including a case 100, a jellyroll 300 and the above-mentioned current collector plate. The jellyroll 300 is provided in the case 100. A pole 200 is provided on the case 100. The jellyroll 300 is connected to the jellyroll connection portion 1, and the pole 200 is connected to the pole connection portion 2.

In the battery of the present application, with the current collector plate as described above, the connecting bridge 4 is fused to disconnect the jellyroll connection portion 1 and the pole connection portion 2 when the battery has a thermal runaway, so that the pole 200 and the jellyroll 300 are disconnected, so as to avoid the aggravation of the thermal runaway. The dividing groove 3 can provide a gas discharge channel, releasing the internal pressure of the battery, reducing the risk of the case 100 breaking of the battery and the anode pole flying out.

In the description of this description, the description of the reference terms "some embodiments", "other embodiments", etc. is intended to mean that features, structures, materials, or characteristics described in connection with the embodiments or examples are intended to be included in at least one embodiment or example of the present application. In this specification, schematic statement of the above terms does not necessarily refer to the same embodiment or example. Furthermore, the features, structures, materials, or characteristics described may be combined in any suitable manner in any one or more embodiments or examples.

## Claims

1. A current collector plate having a jellyroll connection portion (1) and a pole connection portion (2), wherein the jellyroll connection portion (1) is provided to be connected to a jellyroll (300) of a battery; the pole connection portion (2) is provided to be connected to a pole (200) of the battery; the current collector plate is provided with a dividing groove (3) and at least one connecting bridge (4) provided in the dividing groove (3); and the connecting bridge (4) connects the jellyroll connection portion (1) and the pole connection portion (2), wherein the connecting bridge (4) is provided to be fused to disconnect the jellyroll connection (1) and the pole connection portion (2) when a thermal runaway of the battery occurs.

2. The current collector plate according to claim 1, wherein the pole connection portion (2) is provided in a central region of the current collector plate; the dividing groove (3) comprises a first groove portion (31) provided around the pole connection portion (2) and a plurality of second groove portions (32) provided at intervals around the first groove portion (31), the plurality of second groove portions (32) respectively communicating with the first groove portion (31); and one of the connecting bridges (4) is provided in the first groove portion (31).

3. The current collector plate according to claim 2, wherein the current collector plate is circular; the jellyroll connection portion (1) is circular; the second groove portion (32) comprises a radial groove (321) extending in a radial direction of the current collector plate and a circumferential groove (322) extending in a circumferential direction of the current collector plate.

4. The current collector plate according to claim 1, wherein the pole connection portion (2) comprises a central portion (21) and a plurality of radiation portions (22); the central portion (21) is located in a central region of the current collector plate; the plurality of radiation portions (22) are provided around the central portion (21); and the connecting bridge (4) is provided at a position between two adjacent radiation portions (22).

5. The current collector plate according to claim 4, wherein the connecting bridges (4) are provided in pairs, and the connecting bridges (4) provided in pairs are arranged symmetrically with respect to the central portion (21).

6. The current collector plate according to claim 4, wherein the pole connection portion (2) further comprises an outer peripheral portion (23) spaced from the central portion (21); and both ends of at least one radiation portion (22) are connected to the central portion (21) and the outer peripheral portion (23), respectively.

7. The current collector plate according to any one of claims 1-6, wherein the thickness of the connecting bridge (4) is less than the thickness of the jellyroll connection portion (1) and the thickness of the connecting bridge (4) is less than the thickness of the pole connection portion (2).

8. The current collector plate according to any one of claims 1-6, wherein the edge of the current collector plate is provided with positioning grooves (5).

9. The current collector plate according to claim 8, wherein the positioning grooves (5) are plural; and a plurality of positioning grooves (5) are provided at intervals along a profile direction of the current collector plate.

10. A battery, comprising a case (100), a jellyroll (300) and the current collector plate according to any one of claims 1-9, wherein the jellyroll (300) is provided in the case (100), the case (100) being provided with a pole (200); the jellyroll (300) is connected to the jellyroll connection portion (1); and the pole (200) is connected to the pole connection portion (2).
